# EUROPÄISCHE PATENTSCHRIFT

(11) **EP 3 050 653 B1**
(45) Veröffentlichungstag und Bekanntmachung des Hinweises auf die Patenterteilung: **30.05.2018**
(21) Anmeldenummer: 15153124.1
(22) Anmeldetag: 29.01.2015
(51) Int. Cl.: B23B 3/06, B23Q 1/54, B23Q 39/02

(54) **Vertikaldrehmaschine mit schwenkbarem Werkzeugträger und Werkzeugrevolver**
Vertical turning machine comprising pivoting tool holder and tool revolver
Tour vertical doté de porte-outil pivotant et de tourelle revolver

(43) Veröffentlichungstag der Anmeldung: 03.08.2016
(73) Patentinhaber: Gildemeister Drehmaschinen GmbH, 33689 Bielefeld (DE)
(72) Erfinder: Lube, Siegfried, 73235 Weilheim/Teck (DE); Maesselhaeuser, Ralph, 75365 Calw-Stammheim (DE)
(74) Vertreter: MERH-IP Matias Erny Reichl Hoffmann Patentanwälte PartG mbB

(56) Entgegenhaltungen:
- EP-A2- 1 027 955
- EP-A2- 2 524 751
- DE-A1- 10 034 973

## Beschreibung

Die Erfindung betrifft eine Vertikaldrehmaschine, die mindestens eine vertikal angeordnete Werkstückspindel umfasst, die an ihrer Unterseite eine Werkstückaufnahme zum Aufnehmen und Halten eines Werkstücks aufweist. Die erfindungsgemäße Vertikaldrehmaschine ist mindestens in einer senkrechten und/oder einer horizontalen Richtung verfahrbar und umfasst einen um eine horizontale Schwenkachse schwenkbaren Werkzeugträger, der als Schwinge ausgebildet ist, und der in mindestens einem Lagerpunkt gelagert ist.

Drehmaschinen sind Werkzeugmaschinen, auf denen hauptsächlich rotationssymmetrische Werkstücke hergestellt werden. Die Schnittbewegung wird dabei vornehmlich durch Rotation des Werkstücks erzeugt. Gegenüber Drehmaschinen mit horizontaler Spindel können bei Drehmaschinen mit vertikal hängend angeordneter Spindel, also Vertikaldrehmaschinen, die Späne durch die Schwerkraft ungehindert in eine Entsorgungseinrichtung fallen und verbleiben dadurch nur kurz im Bearbeitungsraum.

Eine gattungsgemäße Vertikaldrehmaschine ist aus der Europäischen Patentanmeldung EP 2524751 A2 bekannt. Sie hat den Vorteil, dass durch eine zweiseitige Lagerung des Werkzeugträgers eine hohe Bearbeitungsgenauigkeit erzielt, und der Arbeitsraum der Maschine klein gehalten werden kann. Die Anzahl der auf dem Werkzeugträger angeordneten Drehwerkzeuge ist jedoch für bestimmte Zwecke unzureichend.

Eine weitere gattungsgemäße Vertikaldrehmaschine ist aus der Offenlegungsschrift DE 102005039818 A1 bekannt, bei der ein Werkzeugrevolver mit einer Vielzahl von sternförmig angeordneten Drehwerkzeugen in einem Bereich neben einer Schwinge im Maschinengestell gelagert ist. Auf der Schwinge ist eine Werkzeugspindel angeordnet. Die Drehmaschine weist somit zwei getrennte Arbeitsbereiche auf, einen für die auf der Schwinge vorgesehene Werkzeugspindel und einen für die auf dem Werkzeugrevolver angeordneten Werkzeuge, wodurch der Arbeitsraum und somit die gesamte Maschine stark vergrößert wird.

Die Offenlegungsschrift DE 10235873 A1 offenbart eine weitere gattungsgemäße Vertikaldrehmaschine mit zwei Werkstückspindeln und einem beidseitig gelagerten schwenkbaren Werkzeugträger, auf dem zwei Werkzeugspindeln angeordnet sind. Für die Bearbeitung eines Werkstücks steht also jeweils nur ein Werkzeug zur Verfügung.

Die Offenlegungsschrift DE 10034973 A1 beschreibt eine Universalmaschine mit drehbarem und verfahrbarem Werkstückträger, der eine vertikale Drehachse aufweist. Die Maschine weist außerdem eine Arbeitsspindel auf, die um eine horizontale Drehachse schwenkbar ist. Stehende Werkzeuge sind am Umfang des Spindelhalses angeordnet. Zudem weist die Maschine einen Schwenkträger auf, auf dem stehenden Werkzeugen nebeneinander angeordnet sind, die sowohl zum Längsdrehen als auch zum Plandrehen eingesetzt werden können.

Die internationale Patentanmeldung WO 97/10071 A1 beschreibt ein Bearbeitungszentrum mit einer vertikal angeordneten Werkstückspindel und einem drehbaren Werkzeugträger, auf dem eine Vielzahl von Werkzeugen angeordnet ist. Die Anordnung der Werkzeuge auf dem Werkzeugträger erfordert jedoch einen sehr großen Arbeitsraum wodurch die gesamte Maschine stark vergrößert wird. Um die verschiedenen Werkzeuge zu nutzen, können zudem weite Verfahrwege der Werkstückspindel nötig sein.

Der vorliegenden Erfindung liegt die Aufgabe zugrunde, eine Vertikaldrehmaschine bereitzustellen, die eine besonders vielseitige Bearbeitung eines Werkstücks bei relativ geringem Platzbedarf erreichen kann. Eine weitere Aufgabe der Erfindung liegt darin, eine Vertikaldrehmaschine bereitzustellen, die bei einer kompakten Abmessung den zur Verfügung stehenden Raum besonders effizient ausnutzt.

Die Lösung der gestellten Aufgabe gelingt durch Bereitstellen einer Vertikaldrehmaschine, die mindestens eine vertikal angeordnete Werkstückspindel umfasst, die an ihrer Unterseite eine Werkstückaufnahme zum Aufnehmen und Halten eines Werkstücks aufweist, und die mindestens in einer senkrechten und/oder einer horizontalen Richtung verfahrbar ist. Weiterhin umfasst die erfindungsgemäße Vertikaldrehmaschine einen um eine horizontale Schwenkachse schwenkbaren Werkzeugträger, der als Schwinge ausgebildet ist, und der in mindestens einem Lagerpunkt gelagert ist. Erfindungsgemäß ist auf dem Werkzeugträger mindestens ein um eine Schaltachse drehbarer Werkzeugrevolver angeordnet.

Durch die Anordnung eines Werkzeugrevolvers auf dem Werkzeugträger kann die Anzahl der für die Bearbeitung eines Werkstücks zur Verfügung stehenden Werkzeuge ohne wesentliche Vergrößerung des Arbeitsraums der Maschine deutlich erhöht werden. Die Anordnung des Werkzeugrevolvers auf einer Schwinge erlaubt es, seine Werkzeuge in eine kollisionsfreie Arbeitsposition zu bringen. Dadurch kann der Werkzeugrevolver kompakt und mit kleinem Flugkreis ausgeführt werden. Außerdem kann ein Wechsel zwischen Werkzeugen des Werkzeugrevolvers schnell ausgeführt werden, da hierzu nur ein Drehen des Werkzeugrevolvers um die Schaltachse notwendig ist.

Die Anordnung des Werkzeugrevolvers auf dem Werkzeugträger hat den weiteren Vorteil, dass die Werkzeuge des Werkzeugrevolvers durch Schwenken des Werkzeugträgers in beliebige Neigungspositionen relativ zur Werkstückspindel beziehungsweise zum Werkstück gebracht werden können, wodurch einerseits eine besonders vielseitige Bearbeitung von Werkstücken und andererseits ein verbessertes Fallen der beim Bearbeiten erzeugten Späne realisiert werden kann.

Vorteilhafte Aus- und Weiterbildungen, welche einzeln oder in Kombination miteinander eingesetzt werden können, sind Gegenstand der abhängigen Ansprüche.

Der Werkzeugträger kann in zwei Lagerpunkten gelagert sein, die einander entlang der Schwenkachse gegenüber liegen, wobei der Werkzeugrevolver zweckmäßigerweise zwischen den zwei Lagerungspunkten auf dem Werkzeugträger angeordnet ist. Hierdurch kann eine besonders hohe Bearbeitungsgenauigkeit erreicht werden, da nämlich eine Verwindung des Werkzeugträgers minimiert werden kann. Außerdem kann somit die Last des Werkzeugträgers auf zwei Lagerpunkte verteilt werden, was die jeweilige Belastung der Lagerpunkte reduziert.

In einer Ausführung der Erfindung ist eine Aufnahme für einen Werkzeugrevolver in einem schwenkbaren Werkzeugträger derart gestaltet, dass in ihr eine Werkzeug-Motorspindel (Werkzeugspindel) für ein (rotierend) angetriebenes Werkzeug aufgenommen werden kann, wobei Anschlüsse für Strom und/oder Hydraulik und/oder Pneumatik für beide Anwendungsfälle unverändert geeignet sind. Somit kann der Werkzeugrevolver bei Bedarf gegen eine Werkzeugspindel ausgetauscht werden.

Es ist bevorzugt, dass die Schwenkachse des Werkzeugträgers parallel zur X-Achse verläuft. Hierdurch kann die Vertikaldrehmaschine besonders kompakt aufgebaut werden. Zudem kann ein großflächiger Zugang zum Arbeitsraum und insbesondere zum Werkzeugträger geschaffen werden, der nicht durch Lagerungen, Antriebe, Werkstück- beziehungsweise Werkzeugzuführungen und/oder Ähnliches eingeschränkt beziehungsweise behindert wird. Ein weiterer Nutzen dieser Anordnung besteht zum Beispiel darin, dass durch Schwenken des Werkzeugträgers um die Schwenkachse runde Konturen, insbesondere auch senkrecht zur Z-Richtung oder zur Schwenkachse, an einem Werkstück ausgeformt werden können.

Der Werkzeugträger kann als jochförmige Schwinge ausgebildet sein, was bedeutet, dass ein Bereich des Werkzeugträgers, in dem Werkzeuge und insbesondere der Werkzeugrevolver angeordnet sind, von der Schwenkachse beabstandet angeordnet ist. Somit kann eine Schneide eines Werkzeugs auf oder zumindest in unmittelbarer Nähe zur Schwenkachse platziert werden, so dass eine Ungenauigkeit des Schwenkwinkels des Werkzeugträgers keinen oder nur einen sehr kleinen Einfluss auf die Bearbeitungsgenauigkeit hat. Somit kann ein Werkstück besonders präzise bearbeitet werden.

Bei einer bevorzugten erfindungsgemäßen Vertikaldrehmaschine kann der Werkzeugrevolver mindestens ein Innendrehwerkzeug und/oder mindestens ein Außendrehwerkzeug und/oder mindestens ein rotierend angetriebenes Werkzeug aufweisen, wobei es sich bei Letzterem beispielsweise um ein Fräswerkzeug, Bohrwerkzeug, Schleifwerkzeug, und/oder Gewindeschneider handeln kann.

Ein Werkzeugrevolver mit mindestens einem rotierend angetriebenen Werkzeug kann die Variabilität der Bearbeitung eines Werkstücks weiter erhöhen. Insbesondere können somit auch unrunde Konturen an einem Werkstück ausgeformt werden. In besonders zweckmäßiger Weise ist das rotierend angetriebene Werkzeug mit einem von der Schaltachse nach außen weisenden Neigungswinkel angeordnet.

Für den Zweck einer vereinfachten Beschreibung der Drehwerkzeuge wird angenommen, dass ein Drehwerkzeug oder rotierend angetriebenes Werkzeug einen im Wesentlichen zylindrischen Schaft aufweist, an dessen einem Ende mindestens eine Werkzeugklinge angeordnet ist. Eine Symmetrieachse, zum Beispiel die Längsachse des zylindrischen Schafts, kann somit als Referenzachse für Winkelangaben oder zum Beschreiben der Orientierung eines Drehwerkzeugs herangezogen werden.

Ein Werkzeugrevolver mit mindestens einem rotierend angetriebenen Werkzeug kann die Anordnung einer separaten Werkzeugspindel auf dem Werkzeugträger überflüssig machen. Somit kann eine besonders kompakte Vertikaldrehmaschine realisiert werden. Besonders vorzugsweise weist der Werkzeugrevolver mindestens zwei rotierend angetriebene Werkzeuge auf, so dass zum Beispiel zwei verschiedene Fräswerkzeuge oder ein Fräswerkzeug und ein Schleif- oder Bohrwerkzeug angeordnet werden können.

Es kann besonders nützlich sein, wenn der Werkzeugrevolver mehrere identische Dreh- und/oder rotierend angetriebene Werkzeuge aufweist, da somit ein Intervall zwischen der Wartung von verschlissenen Werkzeugen, beziehungsweise Werkzeugklingen, verlängert werden kann. Außerdem kann bei einer besonders intensiven Belastung eines Werkzeugs zwischen gleichen oder gleichartigen Werkzeugen hin- und her geschaltet werden, so dass jeweils eine Phase zum Abkühlen einer Werkzeugklinge ermöglicht wird, wobei die Totzeit zum Schalten zwischen den Werkzeugen sehr kurz ausfallen kann.

Um die Vielfältigkeit der Bearbeitung zu erhöhen, kann der Werkzeugrevolver mindestens vier Außendrehwerkzeuge beziehungsweise mindestens vier Innendrehwerkzeuge aufweisen. In einer besonders nützlichen Ausführung weist der Werkzeugrevolver vier Außendrehwerkzeuge und vier Innendrehwerkzeuge auf, wobei die vier Außen- und Innendrehwerkzeuge in regelmäßigen Winkelabständen von 45 Grad abwechselnd auf dem Werkzeugrevolver angeordnet sein können, wodurch der Platz besonders effizient genutzt werden kann, und wobei große Bereiche zum Verfahren eines Werkstücks zwischen den Werkzeugen frei bleiben können.

Ein weiterer Vorzug, der sich aus der Anordnung des Werkzeugrevolvers auf dem schwenkbaren Werkzeugträger ergeben kann, liegt darin, dass die einzelnen Werkzeuge derart auf dem Werkzeugrevolver angeordnet werden können, dass die Innen- und die Außendrehwerkzeuge sich bei der Bearbeitung eines Werkstücks nicht gegenseitig behindern, da sie unterschiedliche Ausrichtungen aufweisen.

Bei einer vorteilhaften erfindungsgemäßen Vertikaldrehmaschine ist die Schaltachse senkrecht zur Schwenkachse ausgerichtet. Durch diese Anordnung kann es ermöglicht werden, dass Drehbewegungen in drei voneinander unabhängigen Richtungen ausgeführt werden können, nämlich die Drehung um die Z-Achse, ausgeführt von der Werkstückspindel, die Drehung des Werkzeugträgers um die Schwenkachse und die Drehung des Werkzeugrevolvers um die Schaltachse. Der Nutzen hierbei ist, dass nahezu beliebige Orientierungen der auf dem Werkzeugträger angeordneten Werkzeuge eingestellt werden können. Somit kann ein Werkstück auf besonders vielfältige Art und Weise bearbeitet werden.

Es ist bevorzugt, dass der Neigungswinkel der Innendrehwerkzeuge auf dem Werkzeugrevolver bezüglich der Schaltachse größer als 20 Grad ist, so dass die Schneide an der Spitze des Werkzeugs einen erhöhten Abstand von der Schaltachse aufweist. Hierbei wird der Winkel wie in einem Kugelkoordinatensystem als Polarwinkel gegen die Schaltachse gemessen, so dass ein Werkzeug mit einem Neigungswinkel von 0 Grad parallel zur Schaltachse und (bei Nulllage des Werkzeugträgers) vertikal nach oben ausgerichtet ist. Ein Neigungswinkel von 90 Grad entspricht einer radial nach außen gerichteten Orientierung. Besonders vorzugsweise ist der Neigungswinkel eines Innendrehwerkzeugs kleiner als 70 Grad. Hierdurch wird ermöglicht, dass ein ausreichend großer Winkelabstand zu senkrecht zur Schaltachse angeordneten Außendrehwerkzeugen eingestellt werden kann, um eine gegenseitige Behinderung der Werkzeuge zu vermeiden. Ein besonders günstiger Neigungswinkel beträgt 30 Grad oder 45 Grad, da somit ein guter Kompromiss zwischen Vergrößern des Freiraums um die Schaltachse und Winkelabstand zu senkrecht zur Schaltachse angeordneten Werkzeugen realisiert werden kann. In weiteren Ausführungen der Erfindung kann der Neigungswinkel auch beliebige Zwischenwerte in dem vorgehend benannten Bereich annehmen.

In bevorzugter Weise kann ein Innendrehwerkzeug durch Schwenken des Werkzeugträgers und/oder Drehen des Werkzeugrevolvers beliebig ausgerichtet werden, beispielsweise parallel zur Z-Richtung (also vertikal). Eine vertikale Ausrichtung kann insbesondere beim Bearbeiten einer inneren Kontur eines Werkstücks nützlich sein. Dabei kann insbesondere auch das Fallen der erzeugten Späne verbessert werden.

Es ist zudem von großem Nutzen, wenn das mindestens eine Außendrehwerkzeug einen rechten Winkel bezüglich der Schaltachse aufweist. Dabei kann das Außendrehwerkzeug durch Schwenken des Werkzeugträgers beliebig, zum Beispiel vertikal ausgerichtet werden. In vertikaler Ausrichtung eines Außendrehwerkzeugs kann beispielsweise ein Plandrehen eines Werkstücks erfolgen, wobei beispielsweise eine ebene Fläche senkrecht zur Z-Achse ausgeformt werden kann, zum Beispiel eine Grundfläche eines Zylinders oder eines Kegels. Bei Ausrichten eines Außendrehwerkzeugs in horizontaler Richtung kann beispielsweise ein Runddrehen eines Werkstücks erfolgen, zum Beispiel zum Ausformen einer Mantelfläche eines Zylinders oder eines Kegels.

Besonders vorzugsweise wechseln sich entlang des Umfangs des Werkzeugrevolvers jeweils ein um 90 Grad geneigtes Werkzeug, beispielsweise ein Außendrehwerkzeug, und ein um 20 bis 70 Grad, vorzugsweise 30 oder 45 Grad geneigtes Werkzeug, beispielsweise ein Innendrehwerkzeug, ab. Hiermit kann erreicht werden, dass alle Werkzeuge über einen besonders großen Raumwinkelbereich mit einem von der Werkstückspindel gehaltenen Werkstück angesteuert werden können, da für jedes Werkzeug ein besonders großer Zugangsbereich freigehalten werden kann. Ein Werkzeugrevolver mit derart abwechselnd angeordneten Werkzeugen ist somit eine Kombination aus Kronen- und Sternrevolver.

Eine Vertikaldrehmaschine kann neben dem Werkzeugrevolver mindestens eine rotierend angetriebene Werkzeugspindel aufweisen, die besonders vorzugsweise auf dem Werkzeugträger angeordnet ist. Bei der Werkzeugspindel kann es sich zum Beispiel um eine Frässpindel handeln, die ein Fräswerkzeug aufnehmen kann. Mit der Werkzeugspindel lassen sich zum Beispiel auch unrunde Konturen an einem Werkstück ausformen. Dabei wird das Werkstück üblicherweise pendelartig relativ zu dem rotierenden Fräswerkzeug hin- und her bewegt.

Die Drehachse der Werkzeugspindel kann senkrecht zur Schwenkachse ausgerichtet sein. Durch Schwenken des Werkzeugträgers kann somit eine unter einem Winkel erfolgende, vorzugsweise auch unrunde Bearbeitung eines Werkstücks erfolgen. Ein weiterer Vorteil ist hierbei, dass auf besonders einfache Weise, durch Schwenken des Werkzeugträgers zum Beispiel kugelförmige Abschnitte beziehungsweise Kugelsegmente in einem Werkstück ausgeformt werden können.

Besonders vorzugsweise ist die Drehachse der Werkzeugspindel parallel zur Schaltachse des Werkzeugrevolvers ausgerichtet, so dass die Werkzeugspindel und der Werkzeugrevolver platzsparend nebeneinander auf dem Werkzeugträger angeordnet werden können. Somit kann der Werkzeugträger bei gleichzeitiger Anordnung von Werkzeugspindel und Werkzeugrevolver besonders kompakt ausgeführt werden.

Nochmals besonders vorzugsweise ist die Drehachse der Werkzeugspindel senkrecht zur Schwenkachse und parallel zur Schaltachse ausgerichtet. Hiermit kann erreicht werden, dass bei der Bearbeitung eines Werkstücks durch Verfahren der Werkstückspindel in X- und/oder Y-Richtung ein schneller Wechsel zwischen Werkzeugspindel und Werkzeugrevolver erfolgen kann.

Bei einer Ausführungsform der erfindungsgemäßen Vertikaldrehmaschine kann der Werkzeugrevolver stufenlos um die Schaltachse drehbar sein und/oder der Werkzeugträger stufenlos um die Schwenkachse schwenkbar sein. Hierdurch kann erreicht werden, dass beliebige Orientierungen einer Schneide des mindestens einen Innendrehwerkzeugs und/oder Außendrehwerkzeugs und/oder rotierend angetriebenen Werkzeugs angefahren werden können. Somit kann ein Werkstück nahezu beliebig bearbeitet, beispielsweise formgedreht und/oder gefräst werden.

Ein weiterer Vorteil eines stufenlos drehbaren Werkzeugrevolvers, insbesondere in Kombination mit einer auf dem Werkzeugträger angeordneten Werkzeugspindel, kann darin liegen, dass eine besonders kompakte Bauweise des Werkzeugträgers realisiert werden kann. Beim Bearbeiten eines Werkstücks mit der Werkzeugspindel können beispielsweise pendelartige Bewegungen des Werkstückträgers, unter anderem auch parallel zur Schwenkachse des Werkzeugträgers, notwendig sein. Dazu muss auf beiden Seiten der Werkzeugspindel ausreichend Platz vorhanden sein, damit beispielsweise ein Kollidieren des Werkstücks mit einer Aufhängung des Werkzeugträgers und/oder anderen Werkzeugen vermieden werden kann.

Durch eine zum Beispiel geneigte Anordnung der Werkzeuge auf dem Werkzeugrevolver können relativ große freie Zwischenräume zwischen den Werkzeugen vorhanden sein. Diese freien Zwischenräume können durch ein stufenloses, vorzugsweise numerisch gesteuertes, Verdrehen des Werkzeugrevolvers derart ausgerichtet werden, dass eine Gefahr des Kollidierens der Werkstückspindel mit den Werkzeugen des Werkzeugrevolvers minimiert oder ausgeschlossen werden kann. Werkstückspindel und Werkzeugrevolver können somit in einem aufeinander abgestimmten Bewegungsmuster verfahren, beziehungsweise gedreht werden so dass ein äußerst vielseitiges Bearbeiten eines Werkstücks mit einer neben dem Werkzeugrevolver angeordneten Werkzeugspindel ermöglicht wird.

Eine bevorzugte Vertikaldrehmaschine ist mit einer zusätzlichen Vorschubachse (Y) ausgestattet. Es kann besonders nützlich sein, wenn die Werkstückspindel mit der zusätzlichen Vorschubachse (Y) ausgestattet ist. Dazu kann die Werkstückspindel beispielsweise auf einem Schlitten angeordnet sein, der in X- und Y-Richtung verfahrbar ist. Eine zusätzliche Vorschubachse kann eine größere Variabilität in der Bearbeitung von Werkstücken ermöglichen. Zudem kann hiermit eine automatisierte Werkstückaufnahme realisiert werden. Alternativ oder zusätzlich kann auch der schwenkbare Werkzeugträger mit einer Vorschubachse in X- und/oder Y-Richtung ausgestattet sein.

### Kurzbeschreibung der Figuren

Weitere vorteilhafte Ausgestaltungen werden nachfolgend anhand eines in den Zeichnungen dargestellten Ausführungsbeispiels, auf welches die Erfindung jedoch nicht beschränkt ist, näher beschrieben.

Es zeigen:
Figur 1 eine Frontalansicht einer erfindungsgemäßen Vertikaldrehmaschine gemäß einem Ausführungsbeispiel.
Figur 2 eine perspektivische Ansicht des unteren Teils der in Fig. 1 gezeigten Vertikaldrehmaschine.
Figur 3 einen Längsschnitt durch einen Werkzeugträger gemäß dem Ausführungsbeispiel.
Figur 4 eine Schnittansicht quer zum Längsschnitt der Fig. 3 durch einen Werkzeugrevolver.

### Ausführliche Beschreibung der Erfindung anhand eines Ausführungsbeispiels

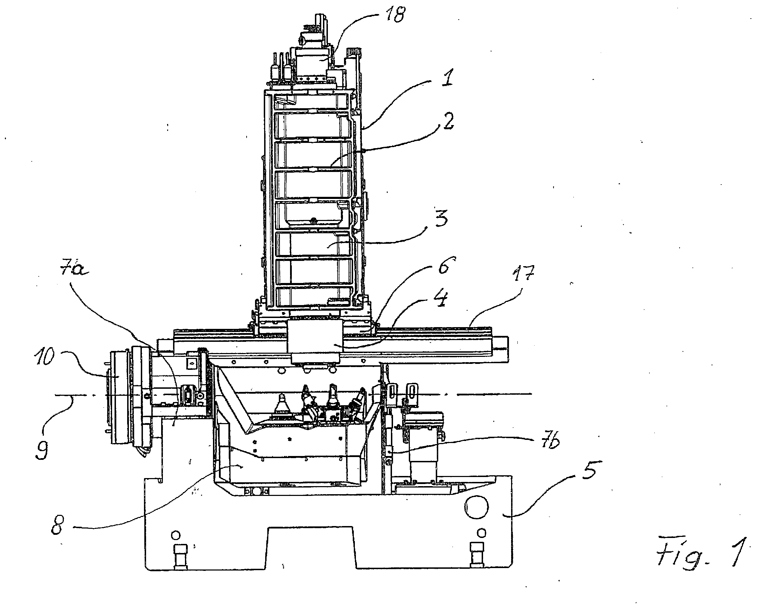

Ein exemplarisches Ausführungsbeispiel der Erfindung wird im Folgenden anhand der Figuren 1 bis 4 beschrieben. Figur 1 zeigt eine Konsole 1, an der ein Spindelgehäuse 2 geführt ist und von einem numerisch steuerbaren Vorschubmotor 18 in Z-Richtung verfahren werden kann. Die Konsole 1 weist eine rotierend angetriebene Werkstückspindel 3 auf, die an ihrer Unterseite eine Werkstückaufnahme 4 trägt, mittels der ein zu bearbeitendes Werkstück 15 eingespannt, beziehungsweise gehalten werden kann. Die Konsole 1 ist auf einem Schlitten 6 angeordnet, der mittels Führungsbahnen 17 in X-Richtung auf einem Maschinenbett 5 verfahrbar ist. Zudem kann die Konsole 1 auf dem Schlitten 6 in Y-Richtung verfahrbar sein. Gemäß der für Drehmaschinen üblichen Definition bezeichnet die Z-Achse die Achse, um die das Werkstück 15 rotiert wird. Diese ist bei der Vertikaldrehmaschine vertikal, also parallel zur Richtung der Schwerkraft, ausgerichtet. Die X-Richtung verläuft horizontal und ist senkrecht zur Z-Richtung ausgerichtet. Die Y-Richtung verläuft ebenfalls horizontal und ist jeweils senkrecht zur X- und Z-Richtung ausgerichtet.

Das Maschinenbett 5 weist zwei Seitenwände 7a, 7b auf, in denen ein jochförmiger als Schwinge ausgebildeter Werkzeugträger 8 um eine Schwenkachse 9 schwenkbar gelagert ist Die Lagerpunkte 7a, 7b liegen einander entlang der Schwenkachse 9 gegenüber und der Werkzeugträger ist zwischen den Lagerpunkten 7a, 7b angeordnet, wodurch eine besonders hohe Bearbeitungsgenauigkeit erreicht werden kann. Die Schwenkachse 9 kann zum Beispiel parallel zur X-Richtung ausgerichtet sein. Die Vertikaldrehmaschine weist einen Schwenkantrieb 10 zum Schwenken des Werkzeugträgers 8 um die Schwenkachse 9 auf.

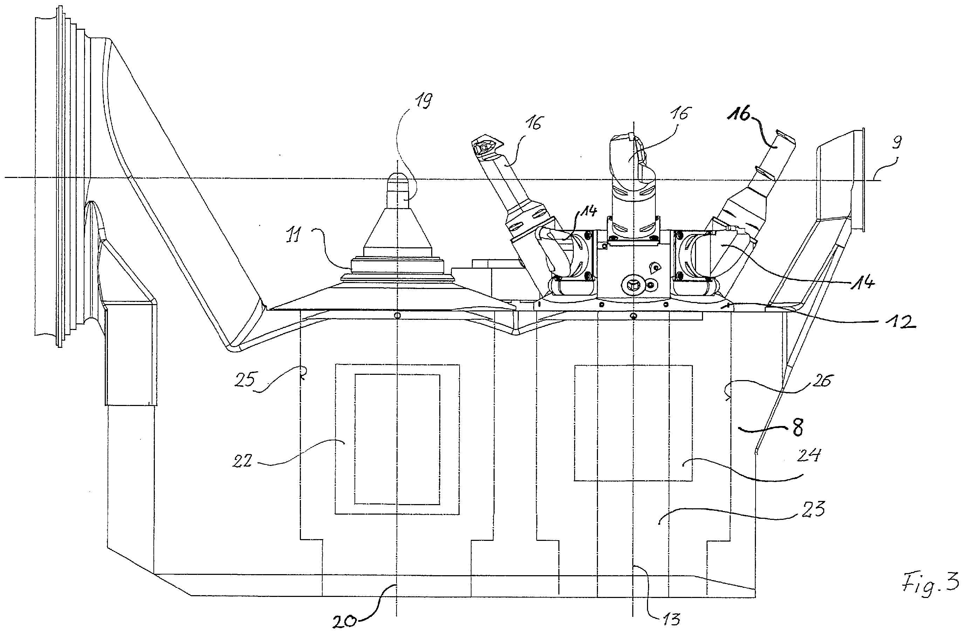

Auf dem Werkzeugträger 8 sind eine um eine Drehachse 20 rotierend angetriebene Frässpindel 11 und ein Werkzeugrevolver 12 nebeneinander angeordnet. Frässpindel 11 und Werkzeugrevolver 12 sind jeweils in einer Gehäuseaufnahme 25, 26 eingesetzt. Wie in Figuren 1 und 3 zu sehen, ist der Werkzeugträger 8 als jochförmige Schwinge ausgestaltet, so dass die Schneiden eines in der Frässpindel 11 aufgenommenen Fräswerkzeugs 19 in unmittelbarer Nähe zur Schwenkachse 9 angeordnet sind. Der Vorteil hierbei ist, dass sich ein Fehler im Schwenkwinkel des Werkzeugträgers 8 nicht oder nur in geringem Maße auf die Bearbeitungsgenauigkeit auswirken kann.

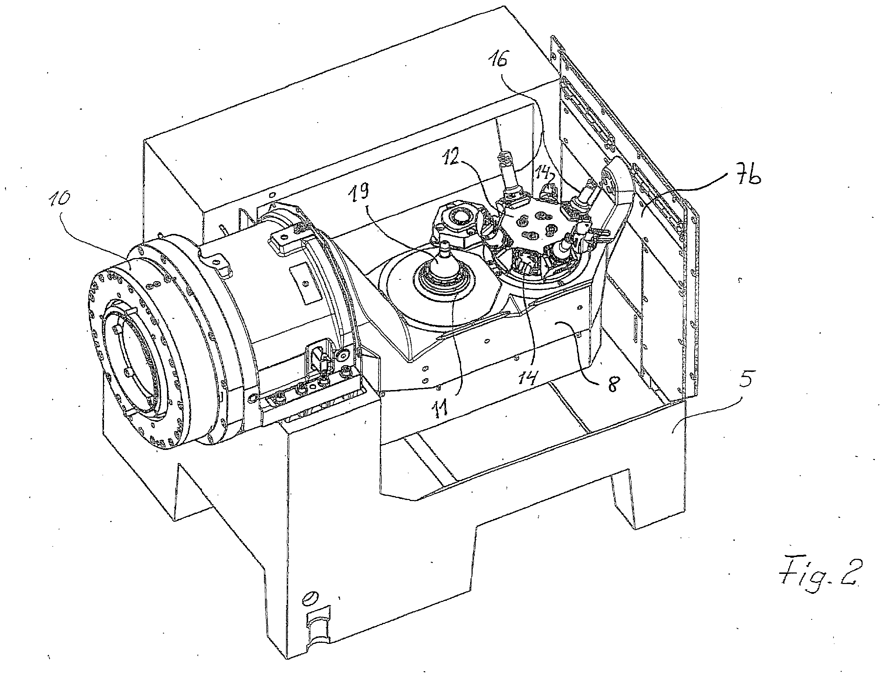

Der beispielhafte Werkzeugrevolver 12 weist, wie in Figur 2 dargestellt, jeweils vier Innendrehwerkzeuge 16 und Außendrehwerkzeuge 14 auf, die in abwechselnder Reihenfolge in regelmäßigen Winkelabständen von 45 Grad umfänglich auf dem Werkzeugrevolver 12 angeordnet sind. Selbstverständlich sind auch Ausführungen möglich, die jeweils drei oder weniger beziehungsweise, jeweils fünf oder mehr Innendrehwerkzeuge 16 und/oder Außendrehwerkzeuge 14 aufweisen.

Bei der dargestellten Ausführungsform sind die Innendrehwerkzeuge 16 gegenüber der Schaltachse 13 des Werkzeugrevolvers 12 nach außen geneigt. Der Neigungswinkel beträgt hierbei circa 30 Grad. In anderen nicht gezeigten Ausführungen kann ein kleinerer Neigungswinkel von beispielsweise 25 Grad oder weniger beziehungsweise ein größerer Neigungswinkel von 35 Grad oder mehr, zum Beispiel 45 Grad vorgesehen sein. Ein Werkzeugrevolver 12 mit geneigt angeordneten Werkzeugen wird auch als Kronenrevolver bezeichnet.

Bei dem gezeigten Ausführungsbeispiel sind die Außendrehwerkzeuge 14 radial auf dem Werkzeugrevolver 12, senkrecht zur Schaltachse 13, wie bei einem Sternrevolver angeordnet. Der gezeigte beispielhafte Werkzeugrevolver 12 ist somit eine Kombination aus Kronen- und Sternrevolver.

Dadurch, dass die Außendrehwerkzeuge 14 jeweils zwischen zwei benachbarten Innendrehwerkzeugen 16 angeordnet sind, kann ein Zwischenraum zwischen den jeweils zwei Innendrehwerkzeugen 16 frei bleiben, so dass ein Werkstück 15 beziehungsweise die Werkstückaufnahme 4 der Werkstückspindel 3 in den Zwischenraum eintauchen kann. Dies ist insbesondere bei der Bearbeitung eines Werkstücks 15 mit einem Außendrehwerkzeug 14 und/oder mit dem neben dem Werkzeugrevolver 12 angeordneten Fräswerkzeug 19 von Vorteil.

Die Schnittansicht der Figur 3 zeigt, dass die Frässpindel (Werkzeugspindel) 11 von einem Spindelmotor 22 um eine Drehachse 20 rotierend angetrieben wird. Der Werkzeugrevolver 12 kann mittels eines integrierten Schaltantriebs 24 gedreht werden. Der Schaltantrieb 24 kann zum Beispiel ein Servomotor, ein Torquemotor oder ein Schrittmotor sein.

Der Werkzeugrevolver 12 des Ausführungsbeispiels kann mittels einer stufenlosen numerischen Steuerung um die Schaltachse 13 gedreht werden. Hierdurch kann der Werkzeugrevolver 12, zum Beispiel bei der Bearbeitung eines Werkstücks 15 mit dem Fräswerkzeug 19, jeweils so nachgeführt werden, dass ein Zwischenraum zwischen zwei benachbarten Innendrehwerkzeugen 16, in den das Werkstück 15 beziehungsweise die Werkstückaufnahme 4 eintauchen beziehungsweise hineingefahren werden muss, um die für die Bearbeitung notwendigen Pendelbewegungen auszuführen, jeweils entsprechend ausgerichtet wird, so dass eine Kollision vermieden wird. Insbesondere kann ein Zwischenraum den pendelnden Bewegungen des Werkstücks 15 nachgeführt werden, was zum Beispiel beim Herstellen von unrunden Formen nützlich sein kann.

Die stufenlose Drehbarkeit des Werkzeugrevolvers 12 gestattet es, eine kompaktere Bauweise des Werkzeugträgers 8, insbesondere in Richtung der Schwenkachse 9 zu realisieren, insbesondere wenn Werkzeugspindel 11 und Werkzeugrevolver 12 wie in dem gezeigten Ausführungsbeispiel entlang der Schwenkachse 9 nebeneinander angeordnet sind. Durch das Nachführen der Freiräume zwischen den Innendrehwerkzeugen 16 kann nämlich der Abstand zwischen Werkzeugspindel 11 und Werkzeugrevolver 12 reduziert werden. Mit einem kompakteren Werkzeugträger 8 kann eine kompaktere Bauweise der Vertikaldrehmaschine erreicht werden. Zudem kann der Werkzeugträger 8 nicht nur eine geringere Größe sondern auch eine geringere Masse aufweisen. Somit muss der Schwenkmotor 10 beim Schwenken des Werkzeugträgers 8 eine entsprechend geringere Last bewegen, was eine hohe Positioniergenauigkeit begünstigen kann.

Durch die Anordnung einer Frässpindel 11 in direkter Nachbarschaft zum Werkzeugrevolver 12 können zudem besonders kurze Verfahrwege der Werkstückspindel 3 ermöglicht werden. Hierdurch kann insbesondere auch Zeit und somit Kosten beim Bearbeiten eines Werkstücks 15 eingespart werden.

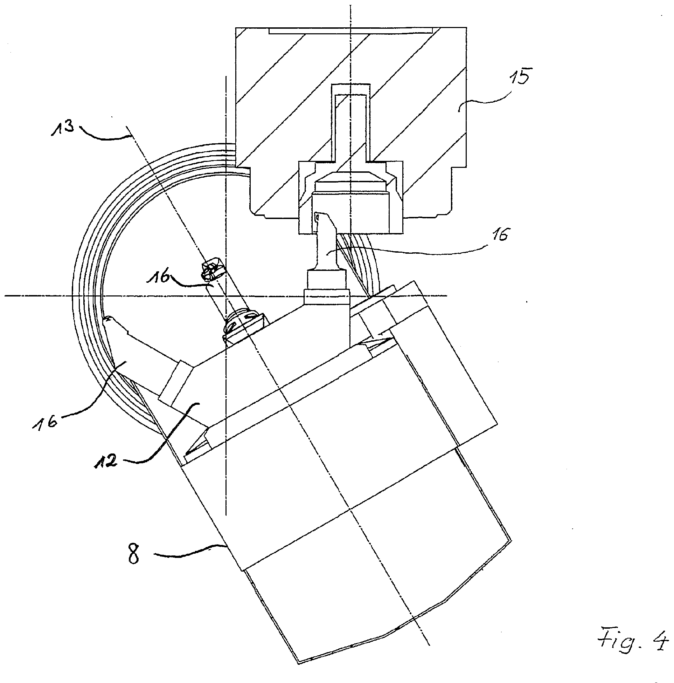

In Figur 4 ist eine Schnittansicht des Werkzeugträgers 8 durch den Werkzeugrevolver 12 quer zur Schwenkachse 9 dargestellt. Der Werkzeugträger 8 befindet sich in einer um 30 Grad gegenüber der Nulllage geschwenkten Stellung. Der Werkzeugrevolver 12 ist so ausgerichtet, dass sich ein Innendrehwerkzeug 16, welches mit einem Neigungswinkel von 30 Grad auf dem Werkzeugrevolver 12 angeordnet ist, an der durch das Schwenken höchsten Stelle befindet. Das Innendrehwerkzeug 16 wird hierdurch vertikal ausgerichtet, so dass eine optimale Bearbeitung eines Werkstücks 15 ermöglicht wird.

Durch die Neigung der Innendrehwerkzeuge 16 nach außen kann zudem ein im Wesentlichen zylindrischer Bereich um die Schaltachse 13 herum, der von den Innendrehwerkzeugen 16 eingeschlossen wird, frei bleiben, wodurch die Gefahr einer Kollision eines in der Werkstückaufnahme 4 eingespannten Werkstücks 15 beziehungsweise der Werkstückaufnahme 4 mit den Werkzeugen des Werkzeugrevolvers 12 minimiert werden kann.

Ein weiterer Vorteil ergibt sich aus der Kombination der Bewegungsfreiheitsgrade der geneigten Werkzeuge. Dadurch dass die Schwenkachse 9 und die Schaltachse 13 senkrecht zueinander angeordnet sind, kann ein nahezu beliebiger Winkel zwischen einer Schneide eines Innendrehwerkzeugs 16 oder Außendrehwerkzeugs 14 und einem Werkstück 15 eingestellt werden. Hierdurch kann die Vielseitigkeit der Bearbeitungsmöglichkeiten erhöht werden.

Wird ein Werkstück 15 wie in Figur 4 gezeigt mit einem Innendrehwerkzeug 16 bearbeitet, kann durch Einstellen eines mit dem Neigungswinkel des Innendrehwerkzeugs 16 identischen Schwenkwinkels eine vertikale Ausrichtung des Innendrehwerkzeugs 16 eingestellt werden, um in dem Werkstück 15 beispielsweise eine zylindrische oder kegelförmige Innenwand zu formen. Durch weiteres Schwenken des Werkzeugträgers 8, könnten beispielsweise sogar (nahezu) horizontal verlaufende, von innen nach außen stehende Wände auf der Innenseite des Werkstücks 15 geformt werden. Dazu könnte in einer wie in Figur 4 gezeigten Situation zum Beispiel das auf der linken Bildseite dargestellte Innendrehwerkzeug 16 mit der Werkstückspindel 3 angefahren werden, so dass eine um circa 60 Grad geneigt Fläche im Inneren des Werkstücks 15 bearbeitet werden könnte.

Soll eine senkrecht zur Z-Achse stehende Fläche eines Werkstücks 15 mit einem Außendrehwerkzeug 14 plangedreht werden, kann der Werkzeugträger 8 in eine um 90 Grad zur Nulllage geschwenkten Stellung ausgelenkt werden. Hierdurch wird das Außendrehwerkzeug 14, welches durch Drehen des Werkzeugrevolvers 12 um die Schaltachse 13 an eine entsprechende Position gebracht wird, in vertikale Ausrichtung gebracht. Somit kann beispielsweise eine ebene Grundfläche an dem Werkstück 15 geformt werden. Durch Schwenken des Werkzeugträgers 8 in die Nulllage, kann ein Außendrehwerkzeug 14 in eine horizontale Ausrichtung gebracht werden.

Dies ist beispielsweise beim Bearbeiten einer äußeren Kontur, beispielsweise einer zylindrischen Mantelfläche besonders zweckmäßig. Soll etwa eine Mantelfläche eines Kegels formgedreht werden, so kann der Werkzeugträger 8 entsprechend um einen Winkel größer als 0 Grad aber kleiner als 90 Grad, zum Beispiel 45 Grad, beziehungsweise größer als 90 Grad, zum Beispiel 100 Grad, entsprechend der gewünschten Orientierung und Steilheit der zu formenden Kontur, ausgelenkt werden.

In weiteren nicht dargestellten Ausführungen der Erfindung kann mindestens ein rotierend angetriebenes Werkzeug auf dem Werkzeugrevolver 12 angeordnet sein.

### Bezugszeichenliste

- 1: Konsole
- 2: Spindelgehäuse
- 3: Werkstückspindel
- 4: Werkstückaufnahme
- 5: Maschinenbett
- 6: Schlitten
- 7a, 7b: Seitenwände (Lagerpunkte)
- 8: Werkzeugträger
- 9: Schwenkachse
- 10: Schwenkantrieb
- 11: Frässpindel (Werkzeugspindel)
- 12: Werkzeugrevolver
- 13: Schaltachse
- 14: Außendrehwerkzeug
- 15: Werkstück
- 16: Innendrehwerkzeug
- 17: Führungsbahnen
- 18: Vorschubmotor
- 19: Fräswerkzeug (rotierend angetriebenes Werkzeug)
- 20: Drehachse der Werkzeugspindel
- 22: Spindelantrieb der Werkzeugspindel
- 23: Revolverwelle
- 24: Schaltantrieb des Werkzeugrevolvers
- 25,26: Gehäuseaufnahme

## Patentansprüche

1. Vertikaldrehmaschine, umfassend:
mindestens eine vertikal angeordnete Werkstückspindel (3), die an ihrer Unterseite eine Werkstückaufnahme (4) zum Aufnehmen und Halten eines Werkstücks (15) aufweist, und die mindestens in einer senkrechten (Z) und/oder einer horizontalen (X) Richtung verfahrbar ist; und
einen um eine horizontale Schwenkachse (9) schwenkbaren Werkzeugträger (8), der als Schwinge ausgebildet ist, und der in mindestens einem Lagerpunkt (7a, 7b) gelagert ist,
**dadurch gekennzeichnet, dass**
auf dem Werkzeugträger (8) mindestens ein um eine Schaltachse (13) drehbarer Werkzeugrevolver (12) angeordnet ist.

2. Vertikaldrehmaschine gemäß Anspruch 1, **dadurch gekennzeichnet, dass**
der Werkzeugträger (8) in zwei Lagerpunkten (7a, 7b) gelagert ist, die einander entlang der Schwenkachse (9) gegenüber liegen und der Werkzeugrevolver (8) in einem Bereich zwischen den zwei Lagerpunkten (7a, 7b) angeordnet ist.

3. Vertikaldrehmaschine gemäß Anspruch 1 oder 2,
**dadurch gekennzeichnet, dass**
der Werkzeugrevolver (12) mindestens ein Innendrehwerkzeug (16) und/oder mindestens ein Außendrehwerkzeug (14) und/oder mindestens ein rotierend angetriebenes Werkzeug (19) aufweist.

4. Vertikaldrehmaschine gemäß mindestens einem der Ansprüche 1 bis 3,
**dadurch gekennzeichnet, dass**
die Schaltachse (13) einen rechten Winkel zur Schwenkachse (9) aufweist.

5. Vertikaldrehmaschine gemäß mindestens einem der Ansprüche 1 bis 4,
**dadurch gekennzeichnet, dass**
der Werkzeugrevolver (12) mindestens ein Innendrehwerkzeug (16) aufweist, das bezüglich der Schaltachse (13) einen Neigungswinkel aufweist, wobei das Innendrehwerkzeug (16) durch Schwenken des Werkzeugträgers (8) beliebig zur Z-Richtung ausgerichtet werden kann.

6. Vertikaldrehmaschine gemäß mindestens einem der Ansprüche 1 bis 5,
**dadurch gekennzeichnet, dass**
der Werkzeugrevolver (12) mindestens ein Außendrehwerkzeug (14) aufweist, das bezüglich der Schaltachse (13) einen rechten Winkel aufweist, wobei das Außendrehwerkzeug (14) durch Schwenken des Werkzeugträgers (8) beliebig zur Z-Richtung ausgerichtet werden kann.

7. Vertikaldrehmaschine gemäß mindestens einem der Ansprüche 1 bis 6,
**dadurch gekennzeichnet, dass**
der Werkzeugrevolver mindestens ein Außendrehwerkzeug (14) aufweist, das zwischen zwei Innendrehwerkzeugen (16) angeordnet ist, so dass zwischen den zwei Innendrehwerkzeugen (16) ein Zugangsbereich zu dem Außendrehwerkzeug frei bleibt, in den die Werkstückaufnahme (4) und/oder ein von der Werkstückaufnahme (4) gehaltenes Werkstück (15) zum Bearbeiten des Werkstücks (15) mit dem Außendrehwerkzeug (14) hineinbewegt werden kann.

8. Vertikaldrehmaschine gemäß mindestens einem der Ansprüche 1 bis 7,
**dadurch gekennzeichnet, dass**
der Werkzeugträger (8) neben dem Werkzeugrevolver (12) mindestens eine rotierend angetriebene Werkzeugspindel (11) aufweist.

9. Vertikaldrehmaschine gemäß Anspruch 8, **dadurch gekennzeichnet, dass**
die Drehachse (20) der Werkzeugspindel (11) einen rechten Winkel zur Schwenkachse (9) aufweist.

10. Vertikaldrehmaschine gemäß mindestens einem der Ansprüche 1 bis 9,
**dadurch gekennzeichnet, dass**
der Werkzeugrevolver (12) stufenlos um die Schaltachse (13) drehbar ist und/oder der Werkzeugträger (8) stufenlos um die Schwenkachse (9) schwenkbar sind/ist.

11. Vertikaldrehmaschine gemäß mindestens einem der Ansprüche 1 bis 10,
**dadurch gekennzeichnet, dass**
die Vertikaldrehmaschine mit einer zusätzlichen Vorschubachse (Y) ausgestattet ist.

## Claims

1. A vertical lathe, comprising:
at least one vertically arranged work spindle (3) which has a workpiece holder for receiving and holding a workpiece (15) on its underside (4) and which is displaceable at least in a vertical (Z) and/or a horizontal (X) direction; and
a tool carrier (8) which is pivotable about a horizontal pivot axis (9), designed as a rocker and supported in at least one bearing point (7a, 7b),
**characterized in that**
at least one tool turret (12) rotatable about a switching axis (13) is arranged on said tool carrier (8).

2. The vertical lathe according to claim 1, **characterized in that**
said tool carrier (8) is supported in two bearing points (7a, 7b) opposite each other along said pivot axis (9) and said tool turret (8) is arranged in a region between said two bearing points (7a, 7b).

3. The vertical lathe according to claim 1 or 2, **characterized in that**
said tool turret (12) has at least one inner turning tool (16) and/or at least one outer turning tool (14) and/or at least one rotationally driven tool (19).

4. The vertical lathe according to any one of claims 1 to 3, **characterized in that**
said switching axis (13) is oriented at a right angle to said pivot axis (9).

5. The vertical lathe according to any one of claims 1 to 4, **characterized in that**
said tool turret (12) has at least one inner turning tool (16) at an inclination angle with respect to said switching axis (13), wherein said inner turning tool (16) can be oriented at will with respect to the Z direction by pivoting said tool carrier (8).

6. The vertical lathe according to any one of claims 1 to 5, **characterized in that**
said tool turret (12) has at least one outer turning tool (14) at a right angle with respect to said switching axis (13), wherein said outer turning tool (14) can be oriented at will with respect to the Z direction by pivoting said tool carrier (8).

7. The vertical lathe according to any one of claims 1 to 6, **characterized in that**
said tool turret has at least one outer turning tool (14) arranged between two inner turning tools (16) such that between said two inner turning tools (16) an access region for said outer turning tool is kept free into which said workpiece holder (4) and/or a workpiece (15) held by said workpiece holder (4) can be moved for machining said workpiece (15) with said outer turning tool (14).

8. The vertical lathe according to any one of claims 1 to 7, **characterized in that**
said tool carrier (8) has at least one rotationally driven tool spindle (11) next to said tool turret (12).

9. The vertical lathe according to claim 8, **characterized in that**
the rotational axis (20) of said tool spindle (11) is at a right angle to said pivot axis (9).

10. The vertical lathe according to any one of claims 1 to 9, **characterized in that**
said tool turret (12) is continuously rotatable about said switching axis (13) and/or said tool carrier (8) is continuously pivotable about said pivot axis (9).

11. The vertical lathe according to any one of claims 1 to 10, **characterized in that**
said vertical lathe is provided with an additional feed axis (Y).

## Revendications

1. Tour vertical, comportant :
au moins une broche à pièce (3) disposée verticalement et comportant sur sa face inférieure un moyen de logement de pièce (4) pour loger et maintenir une pièce à oeuvrer (15) et mobile dans au moins une direction verticale (Z) et/ou une direction horizontale (X) ; et
un porte-outil (8) qui peut pivoter autour d'un axe de pivotement horizontal (9) et qui est conçu comme une bielle et qui est monté dans au moins un point de montage (7a, 7b),
**caractérisé en ce que**
au moins une tourelle revolver (12) rotative autour d'un axe de commutation (13) est disposée sur le porte-outil (8).

2. Tour vertical selon la revendication 1, **caractérisé en ce que** le porte-outil (8) est monté dans deux points de montage (7a, 7b) opposés l'un à l'autre le long de l'axe de pivotement (9), et la tourelle revolver (8) est disposée dans une zone entre les deux points de montage (7a, 7b).

3. Tour vertical selon la revendication 1 ou 2, **caractérisé en ce que** la tourelle revolver (12) comporte au moins un outil de tournage interne (16) et/ou au moins un outil de tournage externe (14) et/ou au moins un outil (19) entraîné en rotation.

4. Tour vertical selon l'une au moins des revendications 1 à 3, **caractérisé en ce que**
l'axe de commutation (13) présente un angle droit par rapport à l'axe de pivotement (9).

5. Tour vertical selon l'une au moins des revendications 1 à 4, **caractérisé en ce que**
la tourelle revolver (12) comporte au moins un outil de tournage interne (16) qui présente un angle d'inclinaison par rapport à l'axe de commutation (13), l'outil de tournage interne (16) pouvant être orienté de façon quelconque par rapport à la direction Z par pivotement du porte-outil (8).

6. Tour vertical selon l'une au moins des revendications 1 à 5, **caractérisé en ce que**
la tourelle revolver (12) comporte au moins un outil de tournage externe (14) qui présente un angle droit par rapport à l'axe de commutation (13), l'outil de tournage externe (14) pouvant être orienté de façon quelconque par rapport à la direction Z par pivotement du porte-outil (8).

7. Tour vertical selon l'une au moins des revendications 1 à 6, **caractérisé en ce que**
la tourelle revolver comporte au moins un outil de tournage externe (14) qui est agencé entre deux outils de tournage internes (16), de sorte qu'une zone d'accès à l'outil de tournage externe reste libre entre les deux outils de tournage internes (16), zone dans laquelle le moyen de logement de pièce (4) et/ou une pièce (15) retenue par le moyen de logement de pièce (4) peut être insérée pour l'usinage de la pièce (15) par l'outil de tournage externe (14).

8. Tour vertical selon l'une au moins des revendications 1 à 7, **caractérisé en ce que**
le porte-outil (8) comprend, outre la tourelle revolver (12), au moins une broche à outil (11) entraînée en rotation.

9. Tour vertical selon la revendication 8, **caractérisé en ce que**
l'axe de rotation (20) de la broche à outil (11) présente un angle droit par rapport à l'axe de pivotement (9).

10. Tour vertical selon l'une au moins des revendications 1 à 9,
**caractérisé en ce que**
la tourelle revolver (12) est rotative en continu autour de l'axe de commutation (13), et/ou le porte-outil (8) est mobile en pivotement en continu autour de l'axe de pivotement (9).

11. Tour vertical selon l'une au moins des revendications 1 à 10,
**caractérisé en ce que**
le tour vertical est muni d'un axe d'avance supplémentaire (Y).
